# EUROPÄISCHE PATENTSCHRIFT

(11) **EP 0 521 005 B1**
(45) Veröffentlichungstag und Bekanntmachung des Hinweises auf die Patenterteilung: **29.12.1993**
(21) Anmeldenummer: 91904896.7
(22) Anmeldetag: 01.03.1991
(51) Int. Cl.: B41J 2/505, H04N 1/46

(54) **VERFAHREN UND ANORDNUNG FÜR TINTENDRUCKEINRICHTUNGEN ZUR VERMINDERUNG DES TINTENAUFTRAGES AUF DEM AUFZEICHNUNGSTRÄGER BEI FARBIGEM TINTENDRUCK**
PROCESS AND DEVICE FOR REDUCING THE INK JET APPLICATION ON THE PAPER IN COLOUR PRINTING WITH AN INK JET PRINTER
PROCEDE ET AGENCEMENT POUR IMPRIMANTES A JET D'ENCRE DESTINES A REDUIRE L'APPLICATION D'ENCRE SUR LE SUPPORT D'IMPRESSION DANS L'IMPRESSION PAR JET D'ENCRE POLYCHROME

(30) Priorität: 21.03.1990 EP 90105388
(43) Veröffentlichungstag der Anmeldung: 07.01.1993
(73) Patentinhaber: MANNESMANN Aktiengesellschaft, 40027 Düsseldorf (DE)
(72) Erfinder: LUEF, Elvira, D-8000 München (DE)
(74) Vertreter: Meissner, Peter E., Dipl.-Ing.
(86) Internationale Anmeldenummer: DE9100196
(87) Internationale Veröffentlichungsnummer: WO9114578

(56) Entgegenhaltungen:
- EP-A- 0 317 140
- US-A- 4 682 186
- IBM Techncial Disclosure Bulletin, Band 21, Nr. 9 Februar 1979, (New York, T.E. Gagnon et al.: "General purpose scan/digitizing method", Seiten 3673-3674
- Patent Abstracts of Japan, Band 7, Nr. 287 (M-264) (1432), 21 Dezember 1983; JP A 58 162 349
- IBM TECHNICAL DISCLOSURE BULLETIN, Band 29, Nr. 12, Mai 1987, (New York, US), "Compensation for secondary-color spot size in ink-jet printing", Seiten 5398-5400
- IBM Technical Disclosure Bulletin, Band 27, Nr. 4B, September 1984, (New York, US) J. Kitamura: "Draft font generation", Seite 2504

## Beschreibung

Die Erfindung betrifft eine Tintendruckeinrichtung und ein Verfahren zum Betrieb einer Tintendruckeinrichtung gemäß den Merkmalen der Patentansprüche 1 und 4.

Für den Einsatz in Tintenschreibeinrichtungen ist ein Druckkopfaufbau bekannt (DE-OS 28 43 064), bei dem eine Vielzahl von in hoher Dichte angeordneten Austrittsdüsen vorgesehen ist, aus denen einzelne Tintentröpfchen ausgestoßen und gegen einen Aufzeichnungsträger geschleudert werden. Der Tröpfchenausstoß in einem solchen sogenannten Drop-On-Demand-Druckkopf erfolgt unter dem Einfluß von thermoelektrischen Wandlerelementen. Diese sind in Form von Heizwiderständen auf einem Substrat angeordnet, individuell ansteuerbar und einzelnen Tintenkanälen zugeordnet. Bei Ansteuerung eines Heizwiderstandes wird im betreffenden Tintenkanal eine Tintendampfblase erzeugt, die zum Ausstoß eines einzelnen Tröpfchens führt. Dieses unter dem Begriff Bubble-Jet-Technik bekanntgewordene Verfahren, ermöglicht den Aufbau einer Tintenschreibeinrichtung mit hoher Auflösungsfähigkeit, wobei der Schreibkopf mit vielen engen nebeneinander angeordneten Düsenöffnungen aufgebaut werden kann.

Ein derartiger Tintendruckkopf kann sowohl für farbigen Tintendruck als auch für Schwarz-Weiß-Tintendruck verwendet werden. Bei farbigem Tintendruckkopf können dem einzelnen Tintendruckkopf mehrere Teil-Tintendruckköpfe zugeordnet sein, bei denen jeder Teil-Tintendruckkopf mit einer gesonderten Farbe betrieben wird. Erzeugt werden die Zeichen mit einem derartigen Tintendruckkopf im Mosaikdruckverfahren, indem entlang einer Druckzeile eine Vielzahl von einzelnen Pixeln nebeneinander abgedruckt werden. Die Farbwirkung der Pixel kann nun sowohl durch additive Farbmischung als auch durch subtraktive Farbmischung erzeugt werden. Bei der subtraktiven Farbmischung unter Verwendung der Grundfarben Cyan, Magenta und Yellow (Gelb) werden in Abhängigkeit von der gewünschten Farbe im Bereich eines Pixels mehrere Grundfarben übereinander aufgetragen. Hierbei nimmt die reflektierte Strahlungsenergie nicht zu wie bei der additiven Farbmischung, sondern ab bis zu schwarz bzw. extrem dunkel. Bei der Verwendung eines Tintendruckkopfes mit vier Teil-Köpfen, wobei dem ersten Tintendruckkopf eine schwarze Tinte zugeordnet ist und den anderen drei Teil-Tintendruckköpfen Tintenflüssigkeit der Farbe Cyan, Magenta und Yellow, werden die Zwischenfarben durch überlagerten Auftrag von zwei Grundfarben nämlich Cyan, Magenta oder Yellow erzeugt. Ein gemeinsamer Auftrag aller drei Grundfarben ergibt die Farbe Schwarz, wobei aus Gründen des Schriftbildes Schwarz mit einer besonders schwarz eingefärbten Tintenflüssigkeit erzeugt wird. Ein Weißpunkt, ein sogenannter Weißpixel wird durch Unterdrückung des Abdruckes erzeugt. Mit Hilfe dieser Grundfarben lassen sich sowohl Rot-Grün-Blau-Farben als auch die Halbtonstufen herstellen, die zur Erzeugung eines Farbdruckes notwendig sind.

Wird mit einem derartig aufgebauten Tintendruckkopf Farbdruck erzeugt, so kann die aufgetragene Tintenmenge pro Pixel bei höheren Dichten von Farbpixeln z.B. bei einem Raster von 300 dots/inch (dpi) zu einem gegenseitigen Vermischen der Pixel führen. Während des Abdruckes können die einzelnen Farbkomponenten der Pixel nur oberflächlich trocknen, so daß es bei einem erhöhten Farbauftrag zu einem Verlaufen der Pixel untereinander kommen kann. Dies führt zu einem verwaschenen Schriftbild und ist nachteilig für die Kantenschärfe der dargestellten Zeichen.

Aus der US-PS 4,682,186 sind eine Einrichtung und ein Verfahren bekannt, mit der bzw. bei dem mit einem Mehrfarbendruckkopf Zeichen in Form von einzelnen Pixeln unter getrennter Verwendung von schwarzer Tinte und mindestens drei farbigen Tinten als Farbkomponenten gedruckt werden. Ein schwarzer Pixel ist durch Auftragen schwarzer Tinte oder durch überlagertes Auftragen der drei farbigen Tinten, ein farbiger Pixel durch Auftragen von einer einzigen farbigen Tinte oder durch überlagertes Auftragen von zwei farbigen Tinten und ein Weißpixel durch fehlenden Farbauftrag erzeugbar. Bei der bekannten Einrichtung und dem bekannten Verfahren wird ein Graphikspeicher zum Speichern einer zu verarbeitenden Druckzeile verwendet. In diesen Graphikspeicher werden Farbcodewörter eingelesen, die die Farbintensitäten der auszugebenden Pixel beschreiben. Übersteigt die von einem Farbcodewort repräsentierte Intensität eines Farbanteils einen durch die optische Dichte der verwendeten Tinte bestimmten maximalen Intensitätswert, werden die Mengen der zur Erzeugung eines Farbpixels vorgesehenen Tinten durch Normierung auf den maximalen Intensitätswert unter Beibehaltung ihrer relativen Anteile reduziert. Damit lassen sich Farbverfälschungen bei dem erzeugten Druckbild vermeiden, während das Problem des Vermischens der Pixel beim Farbauftrag bestehen bleibt.

Das Problem des Vermischens der Pixel beim Farbauftrag wurde bisher in Farbdruckern noch nicht gelöst. Die bisherigen Möglichkeiten, das Vermischen einzuschränken, beschränkten sich darauf, in der Quellendatei, d.h. getrennt vom Drucker entweder beim Abtasten der Druckvorlage oder der Nachverarbeitung der Druckvorlage in einem gesonderten Rechner die einzugebenden und abzudruckenden Zeichen hinsichtlich ihres Punktaufbaues zu verändern.

Diese Möglichkeiten der Reduktion durch Ausdünnung des Druckrasters sind aber besonders zeitintensiv und deshalb nachteilig für die Systemanwendung. Weiterhin ist es notwendig, dem verarbeiteten System - sei es nun der Abtaster (Scanner) oder der Rechner - die druckerspezifischen Eigenheiten des verwendeten Druckers zu übermitteln. Dies behindert die Flexibilität des Druckereinsatzes.

Aufgabe der Erfindung ist es deshalb, eine Tintendruckeinrichtung und ein Verfahren zum Betrieb einer Tintendruckeinrichtung bereitzustellen, mit der es möglich ist, ohne Verlust an Farbintensität die aufzutragende Tintenmenge bei Farbdruck zu reduzieren.

Ein weiteres Ziel der Erfindung ist es die Tintendruckeinrichtung und das zugehörige Verfahren zum Betrieb der Tintendruckeinrichtung so auszugestalten, daß diese Reduktion im Rahmen der Tintendruckeinrichtung selbst erfolgt, ohne daß zusätzliche externe Verarbeitungsmittel notwendig sind.

Diese Aufgabe wird bei einer Tintendruckeinrichtung an einem Verfahren zum Betrieb der Tintendruckeinrichtung gemäß den Merkmalen der Patentansprüche 1 und 4 gelöst. Vorteilhafte Ausführungsformen der Erfindung sind in den Unteransprüchen gekennzeichnet.

Das Verfahren basiert auf einer Analyse der Farbpixel hinsichtlich der verwendeten Farbkomponenten, wobei der Farbinhalt von benachbarten Farbpixeln in Korrelation zu dem zu druckenden Farbpixel gebracht wird.

Dabei wird die Farbe schwarz ausgefiltert, da diese absolute Dominanz gegenüber beliebigen Farbbandteilen besitzt.

Die Cyan-, Magenta-, Yellow-Farbkomponenten, die bei der Mischung die Farbe schwarz ergeben, werden zerlegt und mit den Farbbandteilen der nachfolgenden Pixel korreliert.

Zwischen zwei korrelierenden Pixel werden Weißanteile sowohl in horizontaler als auch in vertikaler Richtung eingefügt.

Durch die Korrelation der benachbarten Farbpixel und Einfügen von Weißanteilen wird erreicht, daß keine Farbbandteile verloren gehen und Bildinhalte auch in der feinsten Struktur erhalten bleiben.

Durch das Einfügen der Weißanteile wird sowohl die Geometrie als auch der Farbeindruck des Bildes beibehalten.

Bei dem erfindungsgemäßen Verfahren wird im wesentlichen eine Reduzierung der Pixeldichte auf die Hälfte von z.B. 300 dpi auf 150 dpi durch Alternierung der Farbpixel und Weißpixel horizontal und vertikal erreicht, wobei eine druckzeilenweise Verarbeitung der abzudruckenden Druckzeilen erfolgt und die schwarze Farbe aus den zu verarbeitenden Farbpixeln ausfiltriert wird. Die Farbpixel selbst werden auf maximal zwei Farbkomponenten reduziert.

Die Erfindung ermöglicht in vorteilhafter Weise bei geringster Verfälschung der Farbinformation eine Reduzierung der absolut aufzuwendenden Tintenmenge beim Abdruck bei gleichzeitiger Reduzierung der Berührungsflächen der Tintentropfen. Es entsteht dabei kein Bildinformationsverlust und die Verarbeitung kann in Echtzeit mit Hilfe eines dem Drucker zugeordneten Mikroprozessorsystemes erfolgen. Das verwendete Mikroprozessorsystem kann dabei die Druckersteuerung des Druckers selbst sein.

Eine Ausführungsform der Erfindung ist in den Zeichnungen dargestellt und wird im folgenden beispielsweise näher beschrieben. Es zeigen
Figur 1 ein schematisches Blockschaltbild der Tintendruckeinrichtung,
Figur 2 ein Schema der logischen Struktur der Reduzierungssteuerung und
Figur 3 eine schematische Darstellung der Verarbeitung der Druckzeile bezüglich der darin angeordneten farbigen Pixel.

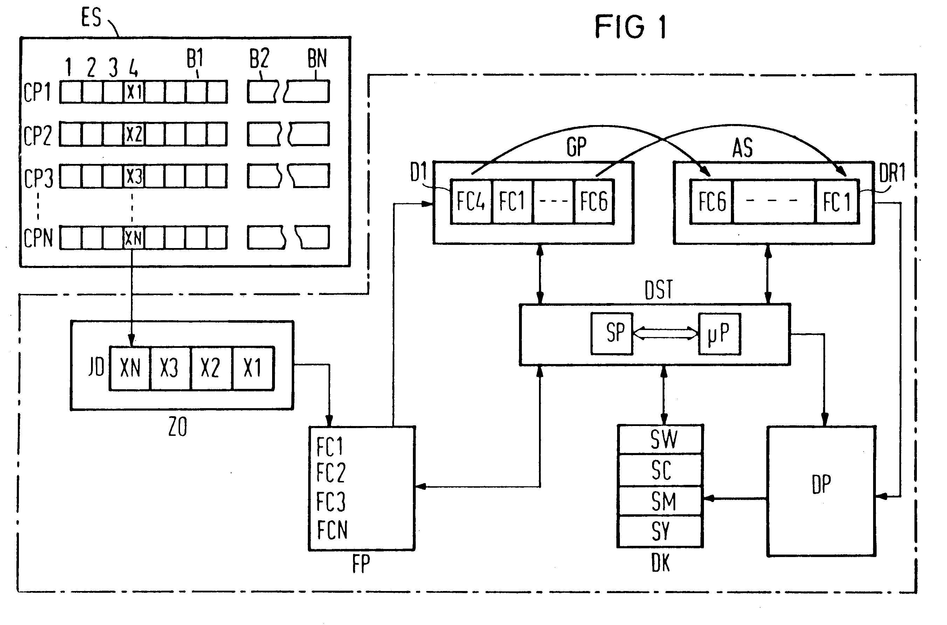

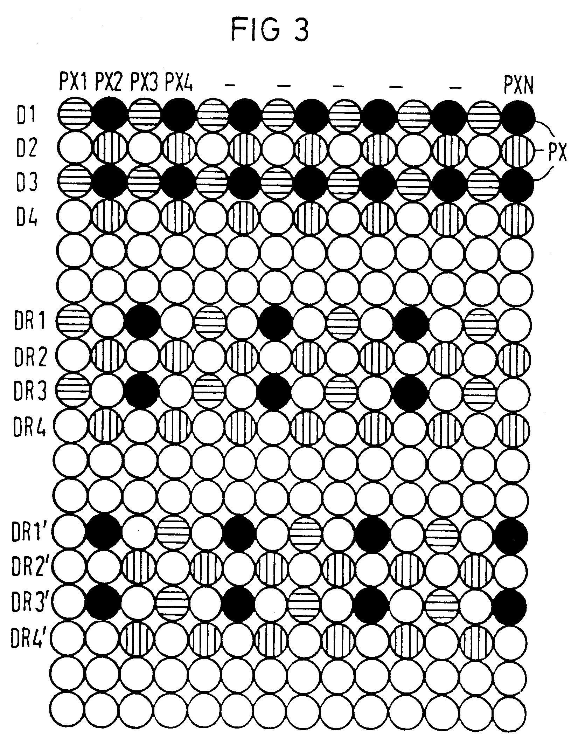

Eine Tintendruckeinrichtung mit einem strukturellen Aufbau, wie er in der Figur 1 dargestellt ist, enthält einen Tintendruckkopf DK mit vier nebeneinander angeordneten Teil-Druckköpfen SW, SC, SM und SY, die jeweils 50 Düsen aufweisen und die so aufgebaut sind, daß ein Druckbild mit 300 dpi erzeugt werden kann. Der Teil-Druckkopf SW wird mit schwarzer Tinte betrieben, die Drückköpfe SC, SM und SY mit Tinte der Farben Cyan, Magenta und Yellow (Gelb). Damit läßt sich ein farbiges Druckbild entsprechend der Darstellung der Figur 3 zusammengesetzt aus einzelnen Pixeln PX abdrucken. Schwarze Pixel werden dabei über den Druckkopf SW erzeugt, farbige Pixel durch zwei Farben der Grundfarben Cyan, Magenta oder Yellow der Druckköpfe SC, SM und SY. Ein sogenannter Weißpixel repräsentiert einen Punkt ohne Farbauftrag. Verbunden mit dem Druckkopf DK ist ein Druckpuffer DP, der die Ansteuersignale für den Druckkopf DK liefert. Weiterhin enthält die Tintendruckeinrichtung einen Grafikpuffer GP zur Aufnahme der Farbcodewörter einer Druckzeile, sowie einen Arbeitsspeicher AS zur Aufnahme einer mit Hilfe einer Reduzierungssteuerung DST umgesetzten Druckzeile. Verbunden mit dem Grafikspeicher GP ist eine Farbpalette FP in Form eines Speichers, indem die abdruckbaren Farben der Druckeinrichtung in Form von Datenwörtern gespeichert sind. Diese Farbpalette FP steht mit einer Zuordnungseinrichtung ZO in Verbindung, deren Funktion später beschrieben wird. Verbunden mit der Druckeinrichtung ist eine Eingabeeinrichtung in Form eines Rechners, z.B. eines PC's mit einem darin enthaltenen Empfangsspeicher ES. Dieser PC kann z.B. mit einem Scanner verbunden sein, der eine Vorlage abtastet und zeilenweise für den Ausdruck über die Tintendruckeinrichtung aufarbeitet.

Die Funktion einer derartigen Tintendruckeinrichtung mit zugehöriger Reduzierungssteuerung DST wird im folgenden näher beschrieben:

In dem Empfangsspeicher ES der mit der Druckeinrichtung gekoppelten Eingabeeinrichtung (PC) werden die abzudruckenden Druckzeilen gespeichert. Dargestellt in der Figur 1 ist dabei eine Druckzeile. Die Information über die Breite der Druckzeile und damit der Anzahl von Pixel PX ist durch die Anzahl von Datenwörtern gleicher Länge B1 bis BN (Bytes) vorgegeben. Dabei bestimmt der Ort jedes Bits 1 bis N in der Druckzeile die Lage des Pixels in der abzudruckenden Zeile.

Entsprechend der Anzahl der möglichen Farben sind mehrere Colourplans CP1 bis CPN übereinander angeordnet. Verwendet man entsprechend dem Ausführungsbeispiel die Grundfarben Cyan, Magenta und Yellow, so können zur Erzeugung von Mischfarben nur zwei Farben übereinander angeordnet werden, da drei Farben die Farbe Schwarz ergeben. Somit sind 6 Mischfarben und die Farbe Schwarz und Weiß möglich. Um den Pixeln jeder Druckzeile, repräsentiert durch die Bits 1 bis N, entsprechende Farben in der Druckeinrichtung zuordnen zu können, werden die Bits für jeden Pixel in diesem Falle für den Pixel 4 (Bit 4) über eine einem Interface zugeordnete Zuordnungseinrichtung ZO der Druckeinrichtung aus dem Empfangsspeicher ES ausgelesen bzw. der Zuordnungseinrichtung ZO vom Empfangsspeicher ES der externen Einrichtung eingegeben und in der Zuordnungseinrichtung ZO zu einem Indexdatenwort ID zusammengesetzt. Dieses Indexdatenwort ID enthält in codierter Form die Inhalte des Bits 4 der Colourplans CP1 bis CPN. Das Indexdatenwort repräsentiert dabei die Farbinformation für den Pixel 4. In dem Farbspeicher FP sind die möglichen Farbcodewörter FC1 bis FCN für die möglichen Farben abgelegt und werden über die Indexdatenwörter ID aufgerufen und zeilenweise im Grafikpufferspeicher GP abgelegt. Damit befindet sich im Grafikpuffer GP die zu verarbeitende Druckzeile D1, wobei jedem Pixel ein Farbcodewort FC1 bis FCN zugeordnet ist.

Diese vorgesehene Druckzeile D1 mit der maximal möglichen Pixeldichte wird nun mit Hilfe der Druckersteuerung DST mit darin integrierter Reduzierungssteuerung verarbeitet und als reduzierte tatsächlich auszudruckende Pixelzeile bzw. Druckzeile DR1 in dem Arbeitsspeicher AS abgelegt und zwar als Folge von Farbcodewörtern FC1 bis FCN. Dabei ist jedem Pixel ein Farbcodewort zugeordnet. Die reduzierte Druckzeile DR1 wird zum Abdruck mit Hilfe der Druckersteuerung DST aus dem Arbeitsspeicher ausgelesen und dem Druckpuffer DP zugeführt, der die reduzierte Druckzeile DR1 in entsprechende Ansteuersignale für den Druckkopf DK umsetzt.

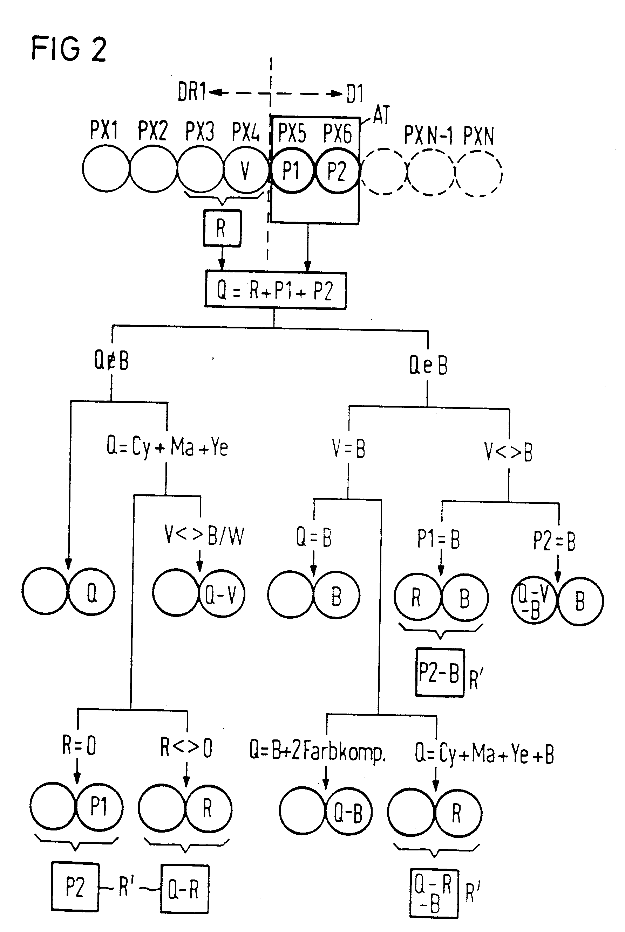

Die Reduzierungssteuerung DST zur reduzierten Umsetzung der vorgesehenen gespeichertern Druckzeile D1 in eine tatsächlich abzudruckende reduzierte Druckzeile DR1 arbeitet nach dem in der Figur 2 angegebenen Logikprinzip. Sie enthält einen Mikroprozessor µP mit zugehörigem Programmspeicher SP und ist konventionell aufgebaut. Zur Umsetzung wird die vorgesehene gespeicherte Druckzeile D1 mit Hilfe eines Abtastfensters AT paarweise abgefragt und zwar bezüglich der Farbinformation des abzufragenden Pixelpaares AT und das Ergebnis nach der Umrechnung im Arbeitsspeicher AS als Teil der Druckzeile DR1 niedergelegt. Wie im Kopf der Figur 2 dargestellt, erfaßt das Fenster AT die Pixel PX5 und PX6 als Pixelpaar der Druckzeile D1, wobei die Ergebnisse der vorausgehenden Umrechnungen der Pixel PX1 bis PX4 als umgesetzte Druckzeile DR1 links davon dargestellt sind. P1 bezeichnet dabei die Farbe des ersten linken Pixels des soeben mit dem Fenster AT abgefragten Pixelpaares PX5 und PX6, P2 die Farbe des zweiten rechten Pixels des Pixelpaares. V bezeichnet dabei die Farbe des Vorfarbenpixels, d.h. die Farbe bzw. die Farbinformation des bereits umgesetzten benachbarten Pixels PX4, also die Farbe, die tatsächlich als Mischfarbe für den Pixel PX4 ausgedruckt wird. R bezeichnet die Farbinformation, die bei der Verarbeitung der Farben P1 und P2 zur Bildung der Farbe V als Farbrestinformation übrig bleibt, wobei davon auszugehen ist, daß die Farbinformation V durch physikalische Addition der Farbinformationen des Farbpixels erfolgt, jedoch unter der Voraussetzung, daß die Summenfarbe nicht schwarz ergibt oder einer der abgefragten Pixelfarben Schwarz ist. Das strategische Ziel der Umsetzung besteht dabei in der Umwandlung eines Pixelpaares der gespeicherten Druckzeile D1 in einen Weißpixel und einen Farbpixel. Ein Weißpixel ist in der Figur 2 als Kreis ohne Buchstaben, ein Farbpixel als Kreis mit Buchstabe oder Buchstaben dargestellt, wobei ein schwarzer Pixel den Buchstaben B (Black) enthält.

Um dieses strategische Ziel näherungsweise zu erreichen, wird mit Hilfe der Steuereinrichtung zunächst aus der Restfarbe R des bereits berechneten benachbarten Vorpixelpaares und unter Einbeziehung der Farben P1 und P2 des momentan abgetasteten Pixelpaares (Fenster AT) eine sogenannte Quellfarbe Q errechnet. Diese Quellfarbe Q ist die Farbsummeninformation aus P1 + P2 + R des Vorpixelpaares. Nun wird die Quellfarbe Q dahingehend analysiert, ob in der Farbsummeninformation ein Farbcodewort für die Farbe Schwarz enthalten ist. Schwarz muß gesondert behandelt werden. Wegen der absoluten Dominanz der Farbe Schwarz ist sie von den anderen Farbkomponenten zu trennen und alternierend zu drucken.

Enthält die Quellfarbe Q (Summenfarbeninformation) kein schwarz (Q ≠ B (linker Zweig) Figur 2, so wird geprüft, ob die Quellfarbe sämtliche Farbkomponenten (Cyan Cy, Magenta Ma, Yellow Ye) enthält. Die Summe dieser Farbkomponenten der Grundfarben würde wiederum schwarz ergeben. Sind nicht alle drei Farbkomponenten vorhanden, wird das Pixelpaar AT mit den Farben P1, P2 als Weißpixel mit einem farbigen Pixel mit der Farbe Q ausgedruckt (Summenfarbe).

Enthält die Quellfarbe Q sämtliche drei Grundfarben, müssen aus der Summenfarbe Q mindestens eine Farbe oder maximal zwei Farben entnommen werden, da im Pixel maximal zwei Farben (Farbkomponenten) enthalten sein können. Diese Entnahme erfolgt unter Berücksichtigung der Vorfarbe V des Vorfarbenpixels, d.h. der abzudruckenden Farbe des benachbart zum momentanen verarbeiteten Pixelpaares liegenden bereits verarbeiteten Pixels. Ist die Vorfarbe V nicht schwarz oder weiß, setzt sich die Vorfarbe aus Komponenten der Summenfarbe Q zusammen, somit wird die Vorfarbe V aus der Quellfarbe Q (Farbsummeninformation) entnommen und die daraus resultierende Restfarbe dem abzudruckenden farbigen Pixel zugeordnet (Q - V). Ziel ist es dabei, die bei der Verarbeitung bisher behandelte aber noch nicht abgedruckte Farbkomponente beizubehalten und nicht zu verlieren.

Ist in der Summenfarbe Q keine Restfarbe enthalten (R = O), so erhält der umgesetzte und auch farbig auszudruckende Pixel die Farbe P1 des ursprünglichen linken Pixels, wobei die Farbe P2 des rechten Pixels als neue Restfarbe R für den weiteren Verarbeitungsprozeß des nächsten zu verarbeitenden Pixelpaares gespeichert wird. Ist eine Restfarbe vorhanden (R abweichend von O), so erhält der abzudruckende farbige Pixel die Farbe der Restfarbe R, wobei dann als neue Restfarbe R' die Summenfarbe Q abzüglich der Restfarbe R (Q - R) für den weiteren Prozeß gespeichert wird. Die Berücksichtigung der Restfarbe R ist notwendig, weil in diesem Fall bei einem vorherigen Druck eines Pixels eine Farbkomponente nicht berücksichtigt wurde, was für den weiteren Prozeß eine Farbfälschung zum Ergebnis hätte.

Enthält die Summenfarbe Q entsprechend dem rechten Zweig der Figur 2 die Farbe Schwarz (Q enthält B) so ist zu prüfen, ob die Farbe des Vorfarbenpixels V (bereits verarbeiteter Pixel) bereits schwarz war (V = B). In diesem Falle handelt es sich um eine monografische Darstellung und der verarbeitete Pixel erhält die Farbe B (Schwarz).

Ist die Vorfarbe schwarz (V = B) und die Summenfarbe enthält schwarz, so ist zu prüfen, ob maximal zwei Farben aus den Farbkomponenten Cyan Cy, Magenta Ma, Yellow Ye enthalten sind. Enthält die Summenfarbe Q die Farbe Schwarz + 2 Farbkomponenten (Q = B + 2 Farbkomponenten), so wird der farbige Pixel mit der Summenfarbe Q abzüglich der Farbe schwarz (Q - B) abgedruckt. Enthält die Summenfarbe Q sämtliche drei Farbkomponenten der Grundfarben + die Farbkomponente schwarz (Q = Cy + Ma + Ye + B), so ist es notwendig die Restfarbe zu berücksichtigen, der abzudruckende verarbeitete Pixel erhält dann die Restfarbe R. Für den zukünftigen Prozeß wird als neue Restfarbe R' die Summenfarbe Q abzüglich der Restfarbe und der Farbe Schwarz gespeichert (Q - R - B).

Enthält die Quellfarbe (Farbsummeninformation) die Farbkomponente Schwarz und ist die Vorfarbe (Vorfarbenpixel) ungleich schwarz, so muß das strategische Ziel der Reduktion auf einen einzigen Pixel für diesen Fall verlassen werden und dem resultierenden auszudruckenden Schwarzpixel muß ein farbiger Pixel zugeordnet werden, wobei für die Zuordnung der Farbe des farbigen Pixels die Position des Schwarzpixels im abgetasteten Pixelpaar Bedeutung hat, sowie die Farbinformation des vorher verarbeiteten Pixelpaares berücksichtigt werden muß.

Ist der linke Pixel schwarz (P1 = B), erfolgt der Ausdruck eines Pixelpaares bei dem dem linken Pixel die Restfarbe R zugeordnet wird und dem rechten Pixel die Farbe Schwarz (B). Für den weiteren Prozeß wird als neue Restfarbe R' die Differenz aus der Farbinformation des rechten Pixels (P2) abzüglich der Farbe Schwarz B gespeichert (P2 - B). Hat der rechte Pixel P2 die Farbe Schwarz (P2 = B), wird das Pixelpaar in ein Pixelpaar umgesetzt, bei dem das rechte Pixelpaar die Farbe Schwarz (B) hat und dem linken Pixelpaar Q die Summenfarbe Q abzüglich der Vorfarbe und der schwarzen Farbe zugeordnet wird (Q - V - B).

Durch diesen Umsetzungsprozeß ergibt sich eine Druckzeile mit einem Druckbild, das eine Reduzierung des Farbauftrages um ca. 50 % ergibt. Dabei wird die Bildinformation nicht verfälscht und eine farbtreue Wiedergabe erreicht. Der Performensverlust durch die zusätzliche Verarbeitungszeit bei der Umsetzung ist infolge der Echtzeitverarbeitung in der Druckeinrichtung außerordentlich gering.

Es ist jedoch anzumerken, daß das beschriebene Umsetzungsverfahren auch mit Hilfe einer Anordnung ausgeführt werden kann, die außerhalb der Druckeinrichtung anordbar ist. Es ist auch möglich, die Reduzierungssteuerung als gesonderte Schaltungseinheit auszubilden oder aber - wie dargestellt - der Druckersteuerung selbst zuzuordnen. Weiterhin ist es denkbar, die Verarbeitung einschließlich der Umsetzung in einem externen Gerät vorzunehmen.

Damit bei der Umsetzung der einzelnen Druckzeilen keine durchgehenden Weißpixelkonfigurationen entstehen, werden die Weißanteile in Form eines Schachbrettes im gesamten Druckbild alternierend eingefügt. Dies wird dadurch erreicht, daß z.B. für eine erste Druckzeile D1 das paarweise Abtasten mit dem zweiten Pixel beginnt und für die Folgezeile mit dem ersten Pixel oder umgekehrt. Dies sei am Beispiel der Figur 3 erläutert. Bei dem dargestellten Ausführungsbeispiel enthält eine Druckzeile D1 Pixel PX1 bis PXN unterschiedlicher Farben. Eine waagrechte Schraffierung der Kreise symbolisiere dabei die Farbe Blau, eine senkrechte Schraffierung die Farbe Rot und ein ausgefüllter Kreis die Farbe Schwarz.

Die Druckzeile D1 wird dabei in die abzudruckende Druckzeile DR1 umgesetzt und zwar mit einem Verarbeitungsmodus, der das erste Pixel PX1 der Druckzeile D1 zunächst ausläßt und beginnend mit den Pixeln PX2 und PX3 die Pixel paarweise verarbeitet. Die Folgedruckzeile D2 wird beginnend mit dem ersten Pixel PX1 abgetastet unter Verwendung des Pixelpaares PX1 und PX2 und in die Druckzeile DR2 umgesetzt. Für die Druckzeile D3 wird wiederum mit dem Pixel PX2 bei der Abtastung begonnen und diese Druckzeile D3 in die Druckzeile DR3 umgesetzt. Die Druckzeile D4 wird in konsequenter Folge dieses alternierenden Abtastens in die Druckzeile DR4 umgesetzt.

Wird beim Abtasten der ersten Druckzeile des Druckzeilenfeldes unmittelbar mit den Pixeln PX1 und PX2 begonnen, so ergibt sich ein Pixelfeld mit einer Farbgebung entsprechend den umgesetzten Druckzeilen DR1' bis DR4'. Die Felder unterscheiden sich dabei nur in der ersten Spalte.

## Patentansprüche

1. Tintendruckeinrichtung mit
- einem Mehrfarben-Druckkopf (DK) zum Drucken von Zeichen in Form von einzelnen Pixeln (PX) unter getrennter Verwendung von schwarzer Tinte (B) und mindestens drei farbigen Tinten (Cy, Ma, Ye) als Farbkomponenten, wobei
ein schwarzer Pixel durch Auftragen von schwarzer Tinte (B) oder durch überlagertes Auftragen von mindestens drei farbigen Tinten (Cy, Ma, Ye), ein farbiger Pixel durch Auftragen von einer einzigen farbigen Tinte (Cy, Ma, Ye) oder durch überlagertes Auftragen von zwei farbigen Tinten (Cy, Ma, Ye) und ein Weißpixel durch fehlenden Farbauftrag erzeugbar ist; und
- einem Grafikspeicher (GP) zum Speichern einer zu verarbeitenden Druckzeile (D1);
**gekennzeichnet durch**
- eine Reduzierungssteuerung (DST) zur Umsetzung der gespeicherten Druckzeile (D1) in eine reduzierte Druckzeile (DR1), wobei unter Ausfilterung der in der gespeicherten Druckzeile (D1) enthaltenen schwarzen Pixel soweit möglich ein Pixelpaar (AT) aus zwei benachbarten Pixeln der gespeicherten Druckzeile (D1) in einen Weißpixel und in einen Farbpixel oder Schwarzpixel der reduzierten Druckzeile (DR1) übergeführt wird und wobei die Farbe des Farbpixels in Abhängigkeit von Farbkomponenten (P1, P2) des Pixelpaares (AT) und Farbkomponenten (V, R) eines in der Druckzeile (D1) vorausgehenden, benachbarten Pixelpaares (PX3, PX4) bestimmt wird und durch
- Mittel (AS, DP) zum Erfassen der reduzierten Druckzeile (DR1) und zum Umsetzen in Ansteuersignale für den mehrfarbigen Tintendruckkopf (DK).

2. Tintendruckeinrichtung nach Anspruch 1 mit
- Mitteln zum Speichern der Druckzeile (D1) als eine Folge von den Farben der Pixel der Druckzeile (D1) zugeordneten Datenwörtern (FC4, FC6),
- Mitteln zum hintereinander fortlaufenden Auslesen der den Pixelpaaren zugeordneten Datenwörtern (FC4, FC1; FC5, FC4) aus dem Grafikspeicher (GP) und zum Abspeichern einer den Farben der reduzierten Druckzeile (D1) zugeordneten Folge von Datenwörtern (FCN, FC1) in einem Arbeitsspeicher (AS),
- Mitteln zur Analyse der Farbkomponenten (P1, P2, B) des momentan aus dem Grafikspeicher (GP) ausgelesenen Pixelpaares (AT) der Druckzeile (D1) und der Farbkomponenten (V , R) einer bei der Analyse eines in der Druckzeile (D1) vorausgehenden Pixelpaares (PX3, PX4) entstandenen Restfarbe (R) und des überführten Farbpixels (PX4) des vorausgehenden, bereits verarbeiteten Pixelpaares (PX3, PX4) und zur Umsetzung des ausgelesenen Pixelpaares (AT) in Abhängigkeit von dieser Analyse in einen Weißpixel und einen farbigen Pixel (Q, Q-V, P1, R) oder bei Vorhandensein von einer schwarzen Farbkomponente (B) in einen Weißpixel mit zugehörigem schwarzen Pixel (B) oder in einen farbigen Pixel (R; Q - V - B) mit zugehörigem schwarzen Pixel (P) oder in einen Weißpixel mit zugehörigem farbigen Pixel (Q - B, R).

3. Tintendruckeinrichtung nach einem der Ansprüche 1 oder 2 mit
- Mitteln um für eine erste gespeicherte Druckzeile (D1) die Pixel mit zugehöriger Farbinformation paarweise beginnend mit dem zweiten Pixel (PX2) und für eine zweite gespeicherte Druckzeile (D2) beginnend mit dem ersten Pixel (PX1) derart auszulesen und in dem Arbeitsspeicher (AS) abzulegen, daß die entsprechenden reduzierten Druckzeilen (DR1, DR2) bezüglich der Weißpixel versetzt zueinander ausgedruckt werden.

4. Verfahren zum Drucken von Zeichen in Form von einzelnen Pixeln mit Hilfe eines Mehrfarbendruckkopfes (DP) in einer Tintendruckeinrichtung unter getrennter Verwendung von schwarzer Tinte (B) und mindestens drei farbigen Tinten (Cy, Ma, Ye), wobei ein schwarzer Pixel durch Auftragen von schwarzer Tinte (P) oder durch überlagertes Auftragen von mindestens drei farbigen Tinten (Cy, Ma, Ye) ein farbiger Pixel durch Auftragen von einer einzigen farbigen Tinte oder durch überlagertes Auftragen von zwei farbigen Tinten und ein Weißpixel durch fehlenden Farbauftrag erzeugbar ist,
- bei dem eine Druckzeile (D1) in Form von Pixeln zugeordneten, Farbinformationen enthaltenden Datenwörtern (FC4, FCN) in einem Grafikspeicher (GP) abgespeichert wird,
**gekennzeichnet durch**
- eine Umsetzung der gespeicherten Druckzeile (D1) durch paarweise hintereinander fortlaufendes Auslesen der Pixel über die zugeordneten Datenwörter (FC4, FCN) und Abspeichern einer Folge von entsprechenden, Farbinformationen enthaltenen Datenwörtern (FCN, FC4) in einem Arbeitsspeicher (AS) zur Erzeugung einer tatsächlich abzudruckenden reduzierten Druckzeile (DR1), wobei unter Ausfilterung der in der gespeicherten Druckzeile (D1) enthaltenen schwarzen Pixel soweit möglich jedes ausgelesene Pixelpaar der Druckzeile (D1) in der reduzierten Druckzeile (DR1) als ein Weißpixel und ein Farbpixel oder ein Schwarzpixel dargestellt wird, wobei die Umsetzung in Abhängigkeit von der Farbinformation des ausgelesenen Pixelpaares (AT) und der Farbinformation des benachbarten, bereits vorher ausgelesenen Pixelpaares (PX3, PX4) erfolgt und durch
- ein Auslesen der reduzierten Druckzeile (D1) aus dem Arbeitsspeicher (AS) und Umsetzen in Ansteuersignale für den mehrfarbigen Tintendruckkopf (DK).

5. Verfahren nach Anspruch 4 mit folgendem zusätzlichen Verfahrensschritt:
- versetztes Ausdrucken der reduzierten Druckzeilen (DR1) bezüglich der Weißpixel derart, daß die Weißpixel sich in die Druckzeilen (DR1, DR2, DRN) schachbrettartig einfügen.

## Claims

1. Ink jet printer with
- a multi-colour printing head (DK) for printing characters in the form of individual pixels (PX) by the separate use of black (B) and at least three coloured inks (Cy, Ma, Ye) as component colours, such that a black pixel can be produced by coating with black ink (B) or by means of superimposed coating with at least three coloured inks (Cy, Ma, Ye), a coloured pixel can be produced by coating with a single coloured ink (Cy, Ma, Ye) or by superimposed coating with two coloured inks (Cy, Ma, Ye) and a white pixel can be produced by the absence of a colour coating; and
- a graphics memory (GP) for memorizing a print line (D1) to be processed;
**wherein**
- there is a reduction control unit (DST) for converting the memorized print line (D1) into a reduced print line (DR1), such that by filtering out black pixels contained in the memorized print line (D1) as far as possible a pixel pair (AT) made up of two adjacent pixels of the memorized print line (D1) is converted into a white pixel and into a coloured pixel or black pixel of the reduced print line (DR1) and such that the colour of the coloured pixel is determined by colour components (P1, P2) of the pixel pair (AT) and colour components (V, R) of the preceding, adjacent pixel pair (PX3, PX4) and by
- means (AS, DP) for recording the reduced print line (DR1) and for converting into control signals for the multi-coloured ink-jet printing head (DK).

2. Ink-jet printer in accordance with claim 1 with
- means of memorizing the print line (D1) as a sequence of the colours of the pixels of the print line (D1) and the associated data words (FC4, FC6),
- means of successive continuous reading out of the data words (FC4, FC1; FC5, FC4), associated with the pixel pairs, from the graphics memory (GP) and of storing a sequence of data words (FCN, FC1), associated with the colours of the reduced print line (D1), in an operating memory (AS),
- means of analysing the colour components (P1, P2, B) of the pixel pair (AT) of the print line (D1) being read out from the graphics memory (GP) at a particular moment and of analysing the colour components (V, R) at the time of the analysis of an existing remaining colour (R) from a preceding pixel pair (PX3, PX4) in the print line (D1) and of analysing the converted colour pixel (PX4) of the preceding pixel pair (PX3, PX4) which is already being processed and of converting the pixel pair (AT) read out, in accordance with this analysis, into a white pixel and into a coloured pixel (Q, Q-V, P1, R) or, in the case of the presence of a black colour component (B), of converting into a white pixel with the associated black pixel (B) or converting into a coloured pixel (R; Q - V - B) with the associated black pixel (B) or of converting into a white pixel with the associated coloured pixel (Q - B, R).

3. Ink jet printer in accordance with either of claims 1 or 2 with
- means for reading out and filing into the operating memory (AS) the pixels, with the associated colour information, in pairs beginning with the second pixel (PX''), for a first stored print line (D1), and for a second stored print line (D2) beginning with with first pixel (PX1), such that the corresponding reduced print lines (DR1, DR2) are printed out shifted in relation to each other in relation to the white pixel.

4. Process for printing characters in the form of individual pixels with the aid of a multi-colour printing head (DP) in an ink-jet printer employing separate use of black ink (B) and at least three coloured inks (Cy, Ma, Ye), such that a black pixel can be produced by coating with black ink (P) or by superimposed coatings of at least three coloured inks (Cy, Ma, Ye) and a coloured pixel can be produced by coating with a single coloured ink or by superimposed coatings of two coloured inks and a white pixel can be produced by the absence of coating with colour,
- for which a print line (D1) is stored in a graphics memory (GP) in the form of data words (FC4, FCN) containing colour information which is associated with pixels,
**wherein**
- a conversion of the stored print line (D1) by means of paired successive continuous reading out of the pixels by means of the associated data words (FC4, FCN) and storage of a sequence of corresponding data words (FCN, FC4) containing colour information in an operating memory (AS) in order to produce a reduced print line (DR1) which is in the process of being printed, such that with filtering as far as is possible of the black pixels of the stored print line (D1) each pixel pair in the print line (D1) in the reduced print line (DR1) is represented as a white pixel and a coloured pixel or a black pixel, such that the conversion occurs according to the colour information of the pixel pair (AT) read out and the colour information of the adjacent pixel pair (PX3, PX4) which has already been read and by means of
- a reading out of the reduced print line (D1) from the operating memory (AS) and conversion into control signals for the multi-colour ink-jet printing head (DK).

5. Process in accordance with claim 4 with the following additional process stage:
- shifted printing out of the reduced print lines (DR1) in relation to the white pixels such that the white pixels are inserted into the print lines (DR1, DR2, DRN) in a chessboard-pattern fashion.

## Revendications

1. Dispositif d'impression à encre, comportant :
- une tête d'impression polychrome (DK) pour imprimer des signes sous forme de pixels individuels (PX) en utilisant séparément de l'encre noire (B) et au moins trois encres colorées (Cy, Ma, Ye) en tant que composants de couleur, un pixel noir pouvant être créé par application de l'encre noire (B) ou par application superposée d'au moins trois encres colorées (Cy, Ma, Ye), un pixel coloré pouvant être créé par application d'une encre colorée unique (Cy, Ma, Ye) ou par application superposée de deux encres colorées (Cy, Ma, Ye), et un pixel blanc par défaut d'application d'encre ; et
- une mémoire graphique (GP) pour stocker une ligne d'impression (D1) à traiter ;
caractérisé par :
- une commande de réduction (DST) pour transformer la ligne d'impression stockée (D1) en une ligne d'impression réduite (DR1), une paire de pixels (AT) constituée de deux pixels voisins de la ligne d'impression stockée (D1) étant transformée autant que possible en un pixel blanc et en un pixel coloré ou un pixel noir de la ligne d'impression réduite (DR1) en filtrant les pixels noirs contenus dans la ligne d'impression stockée (D1), et la couleur du pixel coloré étant déterminée de façon dépendant des composants colorés (P1, P2) de la paire de pixels (AT) et des composants de couleur (V, R) d'une paire de pixels voisine qui précède dans la ligne d'impression (D1), et par
- des moyens (AS, DP) pour détecter la ligne d'impression réduite (DR1) et pour la transformer en signaux de commande pour la tête d'impression à encre polychrome (DK).

2. Dispositif d'impression à encre selon la revendication 1, comportant :
- des moyens pour stocker la ligne d'impression (D1) en tant que succession de données élémentaires (FC4, FC6) associées aux couleurs des pixels de la ligne d'impression (D1),
- des moyens pour lire de façon continue l'une après l'autre les données élémentaires (FC4, FC1 ; FC5, FC4) associées aux paires de pixels à partir de la mémoire graphique (GP) et pour stocker une succession, associée aux couleurs de la ligne d'impression réduite (DR1), de données élémentaires (FCN, FC1) dans une mémoire de travail (AS),
- des moyens pour analyser les composants de couleur (P1, P2, B) de la paire de pixels (AT), lue à l'instant à partir de la mémoire graphique (GP), de la ligne d'impression (D1) et des composants de couleur (V, R) d'une couleur résiduelle (R) provenant de l'analyse d'une paire de pixels (PX3, PX4) précédente dans la ligne d'impression (D1) et du pixel coloré transformé (PX4) de la paire de pixels précédente déjà traitée (PX3, PX4) et pour transformer la paire de pixels lue (AT) de façon dépendant de cette analyse en un pixel blanc et un pixel coloré (Q, Q-V, P1, R) ou, dans le cas de la présence d'un composant de couleur noir (B), en un pixel blanc ayant un pixel noir associé (B) ou en un pixel coloré (R ; Q - V - B) ayant un pixel noir associé (P) ou en un pixel blanc ayant un pixel coloré associé (Q - B, R).

3. Dispositif d'impression à encre selon une des revendications 1 ou 2, comportant :
- des moyens pour lire, pour une première ligne d'impression stockée (D1), les pixels avec l'information de couleur correspondante, par paire, en commençant par le deuxième pixel (PX2) et, pour une deuxième ligne d'impression stockée (D2), en commençant par le premier pixel (PX1) et les stocker dans la mémoire de travail (AS), de sorte que les lignes d'impression réduites correspondantes (DR1, DR2) sont imprimées de façon décalée l'une par rapport à l'autre relativement aux pixels blancs.

4. Procédé pour imprimer des signes sous forme de pixels individuels à l'aide d'une tête d'impression polychrome (DP) dans un dispositif d'impression à encre en utilisant de façon séparée de l'encre noire (B) et au moins trois encres colorées (Cy, Ma, Ye), un pixel noir pouvant être créé par application d'encre noire (P) ou par application superposée d'au moins trois encres colorées (Cy, Ma, Ye), un pixel coloré par application d'une encre colorée unique ou par application superposée de deux encres colorées, et un pixel blanc par défaut d'application d'encre,
- dans lequel une ligne d'impression (D1) est stockée dans une mémoire graphique (GP) sous forme de données élémentaires (FC4, FCN) contenant des informations de couleur et associées à des pixels,
caractérisé par :
- une transformation de la ligne d'impression stockée (D1) par lecture continue l'un après l'autre par paire des pixels par l'intermédiaire des données élémentaires associées (FC4, FCN), et un stockage d'une succession de données élémentaires (FCN, FC4) correspondantes contenant des informations de couleur dans une mémoire de travail (AS) pour engendrer une ligne d'impression réduite (DR1) à imprimer effectivement, chaque paire de pixels lue de la ligne d'impression (D1) étant représentée, autant que possible, dans la ligne d'impression réduite (DR1) par un pixel blanc et un pixel coloré ou un pixel noir, en filtrant les pixels noirs contenus dans la ligne d'impression stockée (D1), la transformation étant effectuée de façon dépendant des informations de couleur de la paire de pixels lue (AT) et les informations de couleur de la paire de pixels voisine (PX3, PX4) déjà lue précédemment, et par
- une lecture de la ligne d'impression réduite (D1) à partir de la mémoire de travail (AS) et une transformation de celle-ci en signaux de commande pour la tête d'impression à encre polychrome (DK).

5. Procédé selon la revendication 4, ayant l'étape de procédé supplémentaire :
- impression décalée des lignes d'impression réduites (DR1) relativement aux pixels blancs, de sorte que les pixels blancs s'insèrent dans les lignes d'impression (DR1, DR2, DRN) en damier.
